# FASCICULE DE BREVET EUROPEEN

(11) **EP 0 702 814 B1**
(45) Date de publication et mention de la délivrance du brevet: **12.03.1997**
(21) Numéro de dépôt: 94918900.5
(22) Date de dépôt: 09.06.1994
(51) Int. Cl.: G06F 17/60, G06F 153/00

(54) **DISPOSITIF DE CONTROLE DE DATE DE PEREMPTION**
VORRICHTUNG ZUM KONTROLLIEREN EINES ABLAUFDATUMS
DEVICE FOR CHECKING EAT-BY DATES

(30) Priorité: 10.06.1993 FR 9307279
(43) Date de publication de la demande: 27.03.1996
(73) Titulaire: BIESMANS, Jean, F-04510 Mallemoisson (FR); MARTIN, Claude, F-13700 Marignane (FR)
(72) Inventeur: BIESMANS, Jean, F-04510 Mallemoisson (FR); MARTIN, Claude, F-13700 Marignane (FR)
(74) Mandataire: Roman, Michel
(86) Numéro de dépôt international: FR9400681
(87) Numéro de publication internationale: WO9429805

(56) Documents cités:
- EP-A- 0 142 688
- FR-A- 2 444 974
- FR-A- 2 695 741
- US-A- 5 243 579
- US-A- 5 262 940
- US-A- 5 335 509
- PATENT ABSTRACTS OF JAPAN vol. 4, no. 153 (P-33) (635) 1 Août 1980 & JP,A,55 101 068 (MITSUBISHI)
- PATENT ABSTRACTS OF JAPAN vol. 9, no. 129 (P-361) (1852) Juin 1985 & JP,A,60 011 963 (MATSUSHITA)
- IBM TECHNICAL DISCLOSURE BULLETIN., vol.31, no.7, Décembre 1988, ARMONK, US pages 32 - 33, XP000052898 'Easy Identification of Computer Boards'

## Description

La présente invention a pour objet un dispositif de contrôle de date de péremption.

Il est destiné tout particulièrement à un usage domestique, pour vérifier la validité des produits surgelés, mais peut trouver de nombreuses applications dans tous les cas où des dates différentes doivent être associées à des produits, par exemple gestion de stocks de denrées périssables, ou de produits à durée limitée tels que produits pharmaceutiques ou autres.

A notre connaissance, il n'existe à ce jour aucun dispositif simple, efficace et peu onéreux permettant de gérer un stock d'articles en fonction de leur date de péremption.

Les moyens utilisés actuellement sont soit des registres tenus manuellement, que l'on oublie souvent de remplir dans le cas d'une utilisation domestique, soit des équipements informatiques réservés à des quantités importantes d'articles à gérer, en raison de leur coût, de leur encombrement et des manipulations complexes à effectuer.

Le brevet N° FR 2 444 974 (BOSCH-SIEMENS) présente un appareil pour l'enregistrement des produits, tels qu'aliments ou préparations médicinales, stockés dans différents compartiments d'un congélateur ou similaire, cet appareil comportant une mémoire électronique et un affichage numérique, ainsi qu'un clavier servant à l'introduction et à l'appel du contenu de la mémoire et équipé de touches associées aux différents compartiments et/ou à la nature des différents produits à stocker.

L'appareil peut être combiné à un bloc à déchirer dans lequel les étiquettes correspondant aux différentes touches du clavier sont disposées dans l'ordre des différents compartiments du congélateur. Il peut en outre comporter un dispositif indiquant la date limite de conservation du produit stocké, mais ne permet pas d'identifier un produit déterminé ni de différencier deux produits identiques dont les dates limites sont différentes.

Le dispositif de réfrigération pour aliments décrit dans le brevet EP 0 142 688 (INDESIT) comporte des moyens d'acquisition d'informations concernant le genre d'aliments stockés, des moyens mesurant le temps écoulé depuis le début du stockage, des moyens de traitement et d'affichage de l'information ayant pour objet de fournir à l'utilisateur des indications relatives à la durée et à la date limite de stockage.

Il s'agit en fait d'un réfrigérateur comportant un équipement particulier ne pouvant pas de ce fait être utilisé pour un autre appareil.

Quant au brevet N° JP 6 011 963 (MATSUSHITA), il présente un contrôleur de stockage pour réfrigérateur permettant de connaître son contenu sans ouvrir la porte grâce à la variation du poids du réfrigérateur, et comportant un moyen d'enregistrer le nom, les caractéristiques et la date d'introduction des produits, ceux-ci étant contenus dans des boîtes de stockage correspondant exactement au volume du réfrigérateur. Lorsque un produit est extrait du réfrigérateur, le poids d'aliment utilisé est connu et l'information est corrigée. Ainsi le nom et le poids des aliments sont affichés avec le nombre de jours passés, une alarme étant déclenchée si le nombre de jours est très grand. Le produit restant est remis dans la boîte de stockage qui est replacée dans le réfrigérateur. Le poids du réfrigérateur est mesuré et enregistré à nouveau.

Ce dispositif repose sur un système mesurant le poids du réfrigérateur et est essentiellement destiné à gérer les quantités de produits consommées et contenues dans ledit réfrigérateur.

Aucun de ces appareils n'est conçu pour être utilisé avec les congélateurs domestiques existant, et en particuliers ceux du type le plus répandu comportant un unique compartiment.

Le dispositif selon la présente invention telle que définie dans la revendication 1 a pour but de remédier à ces inconvénients en proposant un appareil de faible prix de revient et de faibles dimensions, d'une manipulation extrêmement simple et intuitive permettant de gérer aisément les dates de péremption d'un lot d'articles tels que produits surgelés.

Il est constitué d'un boîtier équipé d'un clavier simplifié comportant uniquement les touches correspondant aux dix chiffres et quelques touches de commande, d'un écran numérique indiquant un numéro de produit et sa durée en semaines ou sa date de péremption, d'une alarme visuelle et sonore, et de circuits internes constitués d'une alimentation électrique, d'une batterie tampon, d'une horloge, d'une mémoire et d'un microprocesseur associé à un programme spécifique pilotant l'ensemble, chaque produit étant repéré grâce à une étiquette ou pastille programmable portant un numéro ou un code attribué par l'appareil au moment de la saisie de la durée de validité du produit.

D'autres mode de réalisation sont définis dans les revendications dépendantes.

Sur les dessins annexés, donnés à titre d'exemple non limitatif d'une des formes de réalisation de l'objet de l'invention:
la figure 1 représente l'appareil vu de face,
la figure 2 est un schéma synoptique unifilaire général, et
la figure 3 représente une pastille de repérage de produit comportant une signalisation sonore et visuelle.

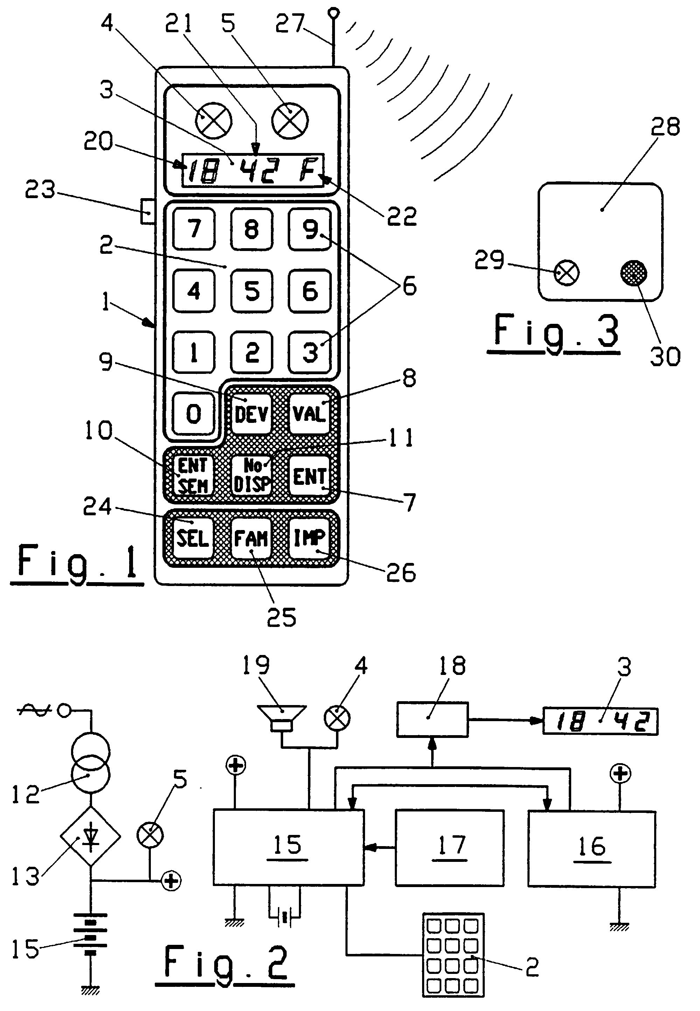

Le dispositif, figures 1 et 2, est constitué d'un boîtier 1 indépendant de l'enceinte de stockage contenant les produits à surveiller, et comportant sur l'une de ses faces un clavier 2, un écran 3 numérique, une alarme visuelle 4 et un témoin 5 de présence de tension secteur.

Dans sa version la plus simple, le clavier 2 est constitué de dix touches numériques 6 portant les chiffres de zéro à neuf permettant de composer la durée de validité en semaines de chaque produit, et de cinq touches de commande ou de fonction:
- une touche "ENTRÉE" 7,
- une touche "VALIDATION" 8,
- une touche "DEVALIDATION" 9,
- une touche "ENTRÉE SEMAINE" 10
- et une touche "NUMÉRO DISPONIBLE" 11.

Le boîtier 1 contient d'une part une alimentation électrique de type connu pouvant être raccordée au secteur, constituée pour l'essentiel d'un transformateur 12 et d'un redresseur 13, et associée à une batterie tampon 14 assurant la sauvegarde des données en cas de coupure de courant et, d'autre part, un équipement électronique composé d'un microprocesseur 15 avec horloge, d'une mémoire vive 16, d'une mémoire morte 17 contenant le programme, d'un décodeur 18 pour l'afficheur numérique 3 et des composants nécessaires au fonctionnement de l'ensemble (non représentés). Le boîtier contient en outre une alarme sonore 19 constituée préférentiellement d'un vibreur piezo-électrique.

Le système est programmé pour décompter les durées de chaque produit en jours alors que ces durées peuvent être introduites en semaines. Cependant la durée de validité peut être indiquée en introduisant la date de péremption, l'appareil étant programmé pour reconnaître automatiquement sous quelle forme la saisie a été effectuée.

Le déroulement des opérations de prise en charge d'un produit se déroule de la façon suivante:
1°. Appui sur la touche "ENTREE" 7 pour activer la machine, qui est normalement en état de veille. Le cadran 3 s'éclaire.
2°. Demande de numéro en agissant sur la touche "NUMÉRO DISPONIBLE" 11, le numéro 20 apparaissant alors sur l'écran numérique 3 étant reporté sur le produit grâce à une étiquette auto adhésive, une pastille programmable 28 ou tout autre moyen.
3°. La touche "ENTRÉE SEMAINES" 10 est actionnée, puis la date de péremption ou le nombre de semaines 21 correspondant à la durée de validité du produit est composé au moyen des touches numériques 6, ce nombre étant affiché pour contrôle.
4° Appui sur la touche "VALIDATION" 8, ce qui provoque l'enregistrement des données saisies.
5° La touche "DEVALIDATION" 9 permet d'annuler si nécessaire une prise en charge erronnée.

A la date de péremption correspondant à la fin de la durée de validité d'un produit, l'appareil met en route les alarmes visuelle 4 et sonore 19 et affiche le numéro attribué au dit produit.

L'utilisateur appuie alors'sur la touche "DÉVALIDATION" 9, ce qui stoppe les alarmes et libère ledit numéro qui pourra ultérieurement être attribué par l'appareil à un autre produit.

La touche "DÉVALIDATION" (ou "ANNULATION") permet également de libérer un numéro lorsqu'un produit est utilisé avant sa date de péremption.

A tout instant, en agissant sur la touche "ENTRÉE" 7, il est possible de faire défiler les numéros des produits surveillés, le nombre 21 de semaines restant étant calculé par l'appareil et s'affichant simultanément avec chaque numéro.

Après un temps prédeterminé de non utilisation, l'appareil se met automatiquement en état de veille.

L'indication de la durée en semaines plutôt qu'en jours a été choisie pour deux raisons:
- Il est en général plus facile de calculer sans erreur le nombre de semaines séparant deux dates que le nombre de jours.
- Dans les recettes de préparation d'aliments destinés à être surgelés, la durée durant laquelle le produit peut être consommé est le plus souvent indiquée en semaines.

Dans une variante de réalisation, il est prévu la possibilité où de relier l'appareil à un ordinateur ou à une imprimante. Dans ce cas, l'appareil comporte un connecteur externe 23 et les produits peuvent être classés en dix familles correspondant chacune à une touche numérique 6. L'écran 3 comporte une zone supplémentaire 22 destinée à l'affichage de la famille du produit cdnsidéré, et trois touches de fonction sont ajoutées au clavier 2, à savoir:
- une touche "SELECTION FAMILLE" 24,
- une touche "N° FAMILLE" 25,
- et une touche "IMPRESSION" 26.

Le repérage des produits peut avantageusement se faire à l'aide de pastilles programmables 28 (figure 3). Ces pastilles fonctionnent sans source de courant interne, grâce à un circuit capteur de puissance connu, capable de fonctionner en tirant l'énergie nécessaire des ondes électromagnétiques envoyées par un émetteur radio situé à proximité. Elles sont équipées d'une signalisation visuelle 29 constituée d'une diode électroluminescente, et d'une signalisation accoustique 30 (buzzer piezoélectrique). Pour permettre l'utilisation de ces pastilles, le boîtier 1 est pourvu d'un émetteur de puissance suffisante et d'une antenne 27.

Au moment de l'introduction des caractéristiques du produit à surveiller, une pastille programmable 28 est introduite dans un logement prévu à cet effet dans le boîtier, ou simplement disposée à proximité de l'antenne 27, ce qui a pour résultat d'introduire un code dans une mémoire intégrée dans la pastille. Cette dernière est alors fixée sur le produit. Lorsque l'on souhaite retrouver un produit qui, ayant atteint sa date de péremption, a provoqué une alarme sur le boîtier 1, ou a été sélectionné au moyen des touches de fonction, il suffit d'approcher l'appareil de la zone où se trouve le produit pour que la pastille fixée sur celui-ci reconnaisse son code spécifique, envoyé par l'émetteur par l'antenne 27, ce qui provoque la mise en route des signalisations visuelle 29 et sonore 30.

L'appareil selon l'invention comporte un moyen d'accrochage, par exemple aimant permanent, permettant de le rendre disponible en permanence à proximité du congélateur. Cependant, il pourra avantageusement être intégré par le constructeur à la carrosserie dudit congélateur ou d'un meuble destiné à contenir les articles à surveiller.

Il est prévu une version équipée d'un microphone, obéissant à la voix grâce à un programme complémentaire capable de reconnaître les dix chiffres et les cinq ordres correspondant aux touches de fonction.

Le positionnement des divers éléments constitutifs donne à l'objet de l'invention un maximum d'effets utiles qui n'avaient pas été, à ce jour, obtenus par des dispositifs similaires.

## Revendications

1. Dispositif de contrôle de date de péremption de produits à surveiller, constitué d'une part, d'un appareil comportant un boîtier (1) mobile, indépendant de l'enceinte de stockage contenant les produits à surveiller, pourvu d'un clavier (2), d'un écran (3) numérique, d'alarmes visuelle (4) et sonore (19) actionnées par le dispositif à la date de péremption de chaque produit surveillé, d'une alimentation électrique (12, 13) avec batterie tampon (14), et contenant un microprocesseur (15) avec horloge, une mémoire vive (16) et une mémoire morte (17) avec programme spécifique pilotant l'ensemble et, d'autre part, d'un moyen de repérage fixé sur chaque produit à surveiller et permettant de l'identifier,
caractérisé en ce qu'il est programmé pour décompter en jours la durée de validité de chaque produit, ladite durée étant introduite, grâce au clavier (2), soit directement en semaines soit en saisissant la date de péremption, l'appareil étant conçu pour reconnaître automatiquement sous quelle forme la saisie a été effectuée, l'écran (3) étant apte à afficher un numéro (20) de produit et sa durée en semaines (21), les produits étant repérés aux moyens de pastilles programmables (28) aptes à fonctionner sans source de courant interne, grâce à un circuit capteur de puissance connu tirant l'énergie nécessaire des ondes électromagnétiques envoyées par un émetteur radio de puissance suffisante intégré au boîtier (1), chaque pastille programmable (28) étant introduite dans un logement prévu à cet effet dans le boîtier (1), ou disposée à proximité de l'antenne (27) de l'émetteur au moment de l'introduction des caractéristiques du produit à surveiller, le système étant programmé pour introduire un code dans une mémoire intégrée dans ladite pastille programmable, fixée ensuite sur le produit qui pourra ainsi être retrouvé en approchant l'appareil de la zone où il est stocké, la pastille fixée sur celui-ci reconnaissant son code spécifique, émis par l'antenne (27) lorsque ledit produit, ayant atteint sa date de péremption, a provoqué une alarme sur le boîtier 1, ou lorsqu'il a été sélectionné au moyen des touches de commande, ce qui provoque la mise en route de signalisations visuelle (29) et sonore (30) équipant les pastilles programmables.

2. Dispositif selon la revendication 1, se caractérisant par le fait que le clavier (2) comporte dix touches numériques (6), une touche "ENTRÉE" (7) activant l'appareil, une touche "NUMÉRO DISPONIBLE" (11) affichant un numéro (20) non utilisé, une touche "ENTRÉE SEMAINES" (10) préparant la saisie de la date de péremption ou du nombre de semaines (21), une touche "VALIDATION" (8) pour valider la saisie et une touche "DEVALIDATION" (9) libérant un numéro (20), chaque produit étant repéré grâce à une étiquette,
- la touche "ENTREE" (7) permettant d'activer l'appareil, qui est normalement en état de veille, et de consulter la durée en semaine restant pour chaque produit surveillé en faisant défiler les numéros (20) des produits surveillés, le nombre (21) de semaines restant, calculé par le dispositif, s'affichant simultanément avec chaque numéro.
- la touche "NUMÉRO DISPONIBLE" (11) faisant apparaître sur l'écran (3) le numéro (20) à reporter sur le produit,
- la touche "ENTRÉE SEMAINES" (10) préparant l'appareil à recevoir la date de péremption ou le nombre de semaines (21) correspondant à la durée de validité du produit, composé au moyen des touches numériques (6), ce nombre étant affiché pour contrôle,
- la touche "VALIDATION" (8) provoquant l'enregistrement des données saisies,
- et la touche "DEVALIDATION" (9) permettant de libérer un numéro en cas d'erreur ou lorsque un produit est utilisé avant sa date de péremption.

3. Dispositif selon l'une quelconque des revendications précédentes, se caractérisant par le fait que les produits peuvent être classés en dix familles correspondant chacune à une touche numérique (6), l'écran (3) comportant une zone supplémentaire (22) destinée à l'affichage de la famille du produit considéré, et le clavier (2) étant pourvu de trois touches de commande en plus, à savoir:
- une touche "SELECTION FAMILLES" (24),
- une touche "N° FAMILLE" (25),
- et une touche "IMPRESSION" (26).

4. Dispositif selon la revendication 3, se caractérisant par le fait qu'il comporte un connecteur externe (23) permettant de relier l'appareil à un ordinateur, ou à une imprimante.

## Patentansprüche

1. Vorrichtung zur Kontrolle des Verfalldatums von zu überwachenden Produkten, bestehend einerseits aus einem System mit einem mobilen Gerät (1), unabhängig von dem die zu überwachenden Produkte enthaltenden Lagerraumes, versehen mit einer Tastatur (2), einem digitalen Anzeigefeld (3), jeweils einem optischen (4) und einem akustischen (19) Alarmgeber, ausgelöst durch die Verfalldatumsvorrichtung jedes überwachten Produktes, einer Stromversorgung (12, 13) mit Pufferbatterie (14) und einem Mikroprozessor (15) mit Zeitgeber, einem Arbeitsspeicher (16) und einem Festwertspeicher (17) mit einem spezifischen die Einheit steuernden Programm, und andererseits einem auf jedem zu überwachenden Produkt befestigten Kennungsmittel, das ermöglicht, dieses Produkt zu identifizieren,
dadurch gekennzeichnet, daß die Vorrichtung programmiert ist, die Gültigkeitsdauer jedes Produktes in Tagen abwärts zu zählen, wobei die besagte Gültigkeitsdauer mittels der Tastatur (2) entweder in Wochen oder durch Erfassen des Verfalldatums eingegeben wird, und das Gerät so ausgelegt ist, daß es automatisch erkennt in welcher Form das Einlesen erfolgte; das Anzeigefeld (3) geeignet ist, eine Produktnummer (20) und dessen Lebensdauer in Wochen (21) anzuzeigen, die Produkte durch programmierbare Plättchen (28) gekennzeichnet sind, welche ohne interne Stromversorgung funktionieren können mittels eines bekannten Leistungs-Sensorkreises, der die erforderliche Energie im Moment der Eingabe der Eigenschaften des zu überwachenden Produktes aus den von einem in das Gerät (1) integrierten Radiosender mit ausreichender Leistung zieht, jedes programmierbare Plättchen (28) in einen für diesen Zweck im Gerät (1) vorgesehenen Sitz eingeführt oder in der Nähe der Antenne (27) des Senders angeordnet und das System programmiert ist, um einen Code in einen Speicher des besagten programmierbaren Plättchens einzugeben, das anschließend am Produkt befestigt wird, welches somit durch die Annäherung des Geräts an den Bereich, in dem es gelagert ist, wiedergefunden werden kann, und das an ihm befestigte Plättchen seinen von der Antenne (27) ausgestrahlte spezifischen Code erkennt, wenn das besagte Produkt, das sein Verfalldatum erreicht hat, auf dem Gerät (1) einen Alarm ausgelöst hat oder wenn es mit Hilfe der Bedientasten ausgewählt wurde, was die optische (29) und akustische (30) Signalgebung mit der die programmierbaren Plättchen ausgerüstet sind in Betrieb setzt.

2. Vorrichtung gemäß Anspruch 1, dadurch gekennzeichnet, daß die Tastatur zehn Nummerntasten (6) aufweist, eine Taste "ENTREE" (EINGABE) (7), die das Gerät aktiviert, eine Taste "NUMERO DISPONIBLE" (VERFÜGBARE NUMMER) (11), die eine nicht benutzte Nummer (20) anzeigt, eine Taste "ENTREE SEMAINES" (WOCHEN-EINGABE) (10), welche die Erfassung des Verfalldatums oder die Anzahl der Wochen (21) vorbereitet, eine Taste "VALIDATION" (VALIDIERUNG) (8) zum Validieren der Datenerfassung, und eine Taste "DEVALIDATION" (ENTVALIDIERUNG), (9), welche eine Nummer (20) freigibt, wobei jedes Produkt mittels eines Etiketts gekennzeichnet ist,
- die Taste "ENTREE" (7) ermöglicht, das Gerät zu aktivieren, das normalerweise auf Stand-by ist, und für jedes zu überwachende Produkt die restliche Dauer in Wochen zu konsultieren durch Ablaufen der Nummern (20) der überwachten Produkte, wobei die durch die Vorrichtung berechnete Anzahl (21) der verbleibenden Wochen gleichzeitig mit der jeweiligen Nummer angezeigt wird;
- die Taste "NUMERO DISPONIBLE" (11) die dem Produkt zuzuordnende Nummer (20) in die Anzeige (3) bringt;
- die Taste "ENTREE SEMAINES" (10) das Gerät darauf vorbereitet, das Verfalldatum bzw. die der Gültigkeitsdauer des Produktes entsprechende Anzahl von Wochen (21) aufzunehmen, welche mit den Nummerntasten (6) eingegeben werden, während diese Anzahl zur Kontrolle angezeigt wird;
- die Taste "VALIDATION" (8) die Registrierung der aufgenommenen Daten bewirkt;
- die Taste "DEVALIDATION" (9) ermöglicht, im Fall eines Fehlers oder wenn ein Produkt vor seinem Verfalldatum verwendet wird, eine Nummer frei zu machen.

3. Vorrichtung gemäß irgendeiner der vorhergehenden Ansprüche, dadurch gekennzeichnet, daß die Produkte in zehn Gruppen unterteilt werden können, wovon jede einer Nummerntaste (6) entspricht, das Anzeigefeld einen zusätzlichen Bereich (22) aufweist, bestimmt zur Anzeige der Gruppe des betreffenden Produktes, und die Tastatur mit drei weiteren Bedientasten ausgerüstet ist:
- eine Taste "SELECTION FAMILLES" (GRUPPENWAHL) (24)
- eine Taste "N° FAMILLE" (GRUPPEN-Nr.) (25)
- und eine Taste "IMPRESSION" (AUSDRUCK) (26).

4. Vorrichtung gemäß Anspruch 3, dadurch gekennzeichnet, daß sie eine externe Steckverbindung (23) besitzt, die ermöglicht, das Gerät an einen Computer oder einen Drucker anzuschließen.

## Claims

1. Device for controlling the sell-by date of products to be monitored, consisting on the one hand of a device comprising a mobile casing (1), separated from the storage compartment containing the products to be monitored, provided with a key (2), a digital screen (3), visual alarm (4) and sound alarm (19) actuated by the device on the sell-by date of each monitored product, an electricity supply (12, 13) with buffer battery (14) and containing a micro-processor (15) with timer, a RAM (16) and a ROM (17) with specific programme piloting the assembly, and, moreover, means of identification fixed on each product to be monitored,
characterized in that it is programme to execute a countdown in days the duration of validity of each product, the said duration being input, through a key pad (2), either directly in weeks or by inputting the sell-by date, the equipment being designed to automatically recognized in what form the input has taken place, the screen (3) being able to display a number (20) of the product and its duration in weeks (21), the products being identified by programmable chips (28) able to operate without an internal power source, using a sensor circuit of known-power drawing the necessary energy from electromagnetic waves dispatched by a radio transmitter of sufficient power integrated in the casing (1), each programmable chip (28) being inserted in a housing provided to this effect in the casing (1) or arranged close to the antenna (27) of the transmitter when the characteristics of the product to be monitored are introduced, the system being programmed to introduce a code into a memory integrated into the said programmable chip, then fixed on the product which will thus be identified by approaching the apparatus to the zone in which it is stored, the capsule fixed thereon recognizing its specific code transmitted by the antenna (27) when the said product, having reached its sell-by date, has tripped an alarm on the casing (1) or when it has been selected using control keys, which leads to startup of the visual (29) and sound (30) signals equipping the programmable chips.

2. Device according to claim 1 characterized in that the keyboard (2) has ten numerical keys (6), an "INPUT" key (7) activating the device, an "NUMBER AVAILABLE" key (11) displaying an unused number (20), an "INPUT WEEKS" key (10) preparing the input of the sell-by date or the number of weeks (21), an "VALIDATION" key (8) for validating the input and a "DEVALIDATION" key (9) freeing a number (20), each product being identified through a label,
- the "INPUT" key (7) enabling the device to be activated, it normally being in a sleep state, and to consult the duration in weeks remaining for each product monitored by causing the numbers (20) of products monitored to scroll, the number (21) of weeks remaining, calculated by the device, being simultaneously displayed with each number.
- the "AVAILABLE NUMBER" key (11) indicating on the screen (3) the number (20) to be applied on the product,
- the "INPUT WEEKS" key (10) preparing the equipment to receive the sell-by date or the number of weeks (21) corresponding to the validity of the product, input using the numerical keys (6), this number being displayed for checking,
- the "VALIDATION" key (8) causing recording of the input data,
- the "DEVALIDATION" key (9) liberating a number in the event of error or when the product is used before its sell-by date.

3. Device according to any one of the aforesaid claims characterized in that the products may be classified in ten families each one corresponding to a numerical key (6), the screen (3) comprising an additional zone (22) intended to display the group of products considered and the keypad (2) being equipped with three additional function keys , i.e.:
- an "FAMILY SELECTION" key (24)
- an "FAMILY NUMBER" key (25)
- an "PRINT" key (26).

4. Device according to claim 3 characterized in that it includes an external connector (23) for connecting the equipment to a computer or to a printer.
